# EUROPÄISCHE PATENTSCHRIFT

(11) **EP 2 531 658 B1**
(45) Veröffentlichungstag und Bekanntmachung des Hinweises auf die Patenterteilung: **20.04.2016**
(21) Anmeldenummer: 11704568.2
(22) Anmeldetag: 04.02.2011
(51) Int. Cl.: E03B 1/04

(54) **SPÜLWASSERBEHÄLTERSYSTEM FÜR SPÜLWASSER EINER MOBILEN TOILETTE**
FLUSHING WATER CONTAINER SYSTEM FOR FLUSHING WATER OF A MOBILE TOILET
SYSTÈME DE RÉCIPIENT D'EAU DE RINÇAGE POUR L'EAU DE RINÇAGE D'UNE TOILETTE MOBILE

(30) Priorität: 05.02.2010 DE 102010007115
(43) Veröffentlichungstag der Anmeldung: 12.12.2012
(73) Patentinhaber: Evac GmbH, 22880 Wedel (DE)
(72) Erfinder: ZAHIR, Tariq, 20535 Hamburg (DE); WENDT, Tobias, 22305 Hamburg (DE); BOTH, Detlev, 20249 Hamburg (DE)
(74) Vertreter: Eisenführ Speiser
(86) Internationale Anmeldenummer: PCT/EP2011/051692
(87) Internationale Veröffentlichungsnummer: WO 2011/095611

(56) Entgegenhaltungen:
- EP-A2- 1 690 789
- CA-A1- 2 285 808
- DE-A1- 10 229 799
- FR-A1- 2 498 656
- US-A- 5 520 805

## Beschreibung

Die Erfindung betrifft ein Spülwasserbehältersystem für Spülwasser einer mobilen Toilette, insbesondere einer mobilen Vakuumtoilette, mit einem Spülwasserbehälter mit einem Spülwasserbehälterzulauf. Die Erfindung betrifft ferner ein Spülwassersystem einer mobilen Toilette.

Sowohl fest installierte Toiletten als auch mobile Toiletten in Fahrzeugen (wie z. B. Schienenfahrzeugen, Flugzeugen, Wasserfahrzeugen, Bussen, etc.) werden durch Spülen von Spülwasser nach deren Benutzung gereinigt. Bei mobilen Toiletten ist zusätzlich zu der Toilette ein Spülwasserbehälter vorgesehen, der das für die Spülung der Toilette notwendige Spülwasser bevorratet. Die Installation einer mobilen Toilette erfordert somit nicht nur die Installation der Toilette selbst, sondern auch die des Spülwasserbehälters. Da der Spülwasserbehälter einer mobilen Toilette nur selten an eine Wasserleitung (z.B. an einer Basisstation) angeschlossen und an dieser aufgetankt werden kann, ist es notwendig ihn für den Spülbedarf der mobilen Toilette ausreichend groß zu bemessenen. Der für die Spülung erforderliche Spülwasserbehälter nimmt entsprechend großen Installationsraum ein. Ferner weist der getankte Spülwasserbehälter ein entsprechend großes Transportgewicht auf.

Mobile Toilettensysteme sind üblicherweise ein Teil von mobilen Waschraumsystemen, die zusätzlich z. B. zu dem Toilettensystem ein Waschbecken zum Waschen der Hände aufweisen. Auch das mobile Waschbeckensystem des mobilen Waschraumsystems benötigt eine Wasserzufuhr aus dem Spülwasserbehälter, der das Frischwasser zum Waschen der Hände in dem Waschbecken bevorratet. Ein mobiles Waschraumsystem benötigt also eine entsprechend große Wassermenge, um sowohl das Waschbeckensystem wie auch das Toilettensystem mit Wasser zu versorgen. Soll die zu transportierende Wassermenge reduziert werden, sind nur relativ kurze Betriebsdauern möglich, d.h. der Wasservorrat muss in kurzen Intervallen aufgefüllt werden.

Es ist Aufgabe der Erfindung, ein Spülwasserbehältersystem für eine mobile toilette und ein Spülwassersystem einer mobilen Toilette zur Verfügung zu stellen, mit dem die Wartungs- bzw. Auffüllungsintervalle eines mobilen Waschraumsystems bzw. Toilettensystems verlängert werden können.

Erfindungsgemäß wird die Aufgabe durch ein Spülwasserbehältersystem gemäß Anspruch gelöst.

Das erfindungsgemäße Spülwasserbehältersystem verringert vorteilhaft den Bedarf an mitzuführendem Wasser erheblich, was signifikante Gewichtseinsparungen und einen verringerten Platzbedarf ermöglicht und die Auffüllungsintervalle verlängert.

Nach europäischer Norm 12056-1 ist sogenanntes "Grauwasser" als fäkalienfreies, gering verschmutztes Abwasser definiert. Das Abwasser eines Waschbeckens, welches z. B. durch Duschen oder Händewaschen verschmutzt wurde, ist ein Beispiel eines solchen Grauwassers. Das Abwasser eines Waschbeckens enthält unter anderem sogenannte Kalkseifen, die im Wasser schwer lösliche Kalzium- oder Magnesiumsalze sind und sich bei der Verwendung von Seifen in hartem kalkhaltigem Wasser bilden.

Erfindungsgemäß wird Grauwasser als Spülwasser einer mobilen Toilette genutzt. Hierdurch erfolgt eine Doppelnutzung des mitgeführten Frischwassers, wodurch die Befüllungsintervalle verlängert werden können, ohne die Frischwassertankgröße zu vergrößern.

Es wurde jedoch erkannt, dass bei einer solchen Grauwassernutzung durch die Ausfällung von Kalzium- und Magnesiumsalzen, die bei der Verwendung von Seifen mit kalkhaltigem Wasser entstehen können, sich Probleme daraus ergeben können, dass sich die Kalkseifen in Magnetventilen und Filtereinsätzen ablagern. Mögliche Folgen sind, dass die Filtereinsätze, Spülauslässe in der Toilette (Spüldüsen) und Wasserventile verstopft werden, dass ein Bakterienwuchs an verstopften oder teilverstopften Stellen begünstigt wird, und dass Geruchsprobleme durch den begünstigten Bakterienwuchs auftreten. Dadurch treten Funktionsstörungen auf, die Kundenunzufriedenheit zur Folge haben und die Systemfunktion einschränken oder gar zum Komplettausfall des Systems führen können, Eine regelmäßige Durchspülung und Reinigung des Toilettensystems, die der Verstopfung und dem Bakterienwuchs entgegenwirken könnten, wären zelt- und kostenintensiv.

Der Erfindung liegt der Gedanke zugrunde, Grauwasser aus einem Waschbecken (insbesondere aus einem Handwaschbecken, Duschwaschbecken oder Badewaschbecken oder auch aus anderen Grauwasserquellen) zu nutzen und durch Zuführen eines kalklösenden und/oder bakteriziden Mittels aufzubereiten, sodass die verstopfenden bzw. den Bakterienwuchs fördernden Eigenschaften des Grauwasser neutralisiert bzw. reduziert werden. Erfindungsgemäß können so zeit- und kostenintensive Durchspülungen und Reinigungen des mit Grauwasser betriebenen mobilen Toilettensystems vermieden werden. Das im Spülwasserbehältersystem bereitgehaltene Wasser kann so in den Spülkreislauf der Toilette eingeführt werden, ohne dass Verstopfungen oder Bakterienwuchs im Spülsystem auftreten. Erfindungsgemäß wird ermöglicht, dass das Wasservolumen (und damit die Größe) des Frisch- und Spülwasserbehälters gegenüber dem/den Frischwasserbehälter(n) herkömmlicher Systeme deutlich reduziert werden kann, da das Wasser zweifach genutzt wird: eine Menge an Frischwasser wird in dem Frischwasserbehälter für das Waschbecken bereitgehalten und nach Verwendung im Waschbecken als Grauwasser dem erfindungsgemäßen Spülwasserbehältersystem zugeführt. Das aufbereitete Grauwasser wird als Spülwasser für die Toilette genutzt.

Es ist weiterhin vorgesehen, dass die Dosiervorrichtung an einer Filtervorrichtung angeordnet ist, insbesondere an einer Filtervorrichtung, die ein Filterelement, das in eine Verbindungsleitung zwischen dem Waschbecken und dem Spülwasservehälter eingesetzt ist, und einen Sammelbehälter umfasst, der ausgebildet ist, um durch die Filtervorrichtung gefilterte Feststoffe aufzunehmen, insbesondere indem die Filtervorrichtung weiterhin eine Spüleinrichtung umfasst, welche einen Spülzufluss und einen Spülabfluss aufweist und ausgebildet ist um im Bereich des Filterelements gesammelte Feststoffe in den Sammelbehälter zu spülen, wobei vorzugsweise der Spülzufluss in Doppelfunktion als Zufluss für das Zuführen eines kalklösenden und/oder bakteriziden Aufbereitungsmittels der Dosiervorrichtung ausgebildet und angeordnet ist. Mit dieser Fortbildungsform wird eine spezifische Problematik adressiert und gelöst, die sich bei der Wiederbenutzung von Grauwässern zur Toilettenspülzwecken stellt. Um einen zuverlässigen Betrieb einer solchen kombinierten Nutzung von Grauwässern zu ermöglichen, ist es regelmäßig, erforderlich, eingebrachte Partikel, wie Haare, Hautschuppen, Seifenreste oder dergleichen abzutrennen, Aus DE 102 29 799A1 ist hierzu eine Filterlösung entsprechend dem Oberbegriff von Anspruch 1 bekannt. Nachteilig an dieser Lösung ist jedoch, dass sie einerseits nicht zuverlässig funktioniert und hierdurch eine Verschmutzung oder Verseifung/Verkalkung nachgeschalteter Funktionselemente im Bereich der Vakuumtoilette zu beobachten ist. Zum anderen ist die so vorbekannte Filterlösung sehr wartungsintensiv, da sie - je nach Nutzerverhalten - in zeitlich kurzen Abständen gereinigt werden muss, um ihre Funktion sicherzustellen.

Mit der vorgeschlagenen erfindungsgemäßen Lösung wird eine hierzu vorteilhafte Filtervorrichtung bereitgestellt und integriert. Die Filtervorrichtung ist in der Zuleitung zu dem Spülwasserbehälter angeordnet, wobei diese Anordnung mäglichst unmittelbar hinter dem Spülbecken erfolgen sollte, um die Filterwirkung für alle hierauf folgenden Funktiorisselemente des Systems bereitzustellen. Die erfindungsgemäße Filtervorrichtung stellt einerseits eine sichere Filterung von Feststoffen her, andererseits wird diese Funktion über einen langen Betriebszeitraum gewährt, indem die Feststoffe in einen Sammelbehälter überführt werden. Diese Überführung wird durch eine Spülfunktion erzielt, wobei die Spülfunktion mittels einer biozidhaitigen, kalklösenden Flüssigkeit erfolgt.

Dabei kann es sich insbesondere um eine insoweit übereinstimmende biozidhaltige, kalklösende Spülflüssigkeit handeln, die auch dem Grauwasser zudosiert wird, um Funktionsbeeinträchtigungen in nachfolgenden Funktionseinheiten des Vakuumtoilettensystems vorzubeugen. Insbesondere ist hierzu vorgesehen, dass sowohl die zur Spülung des Filters benutzte Spülflüssigkeit als auch die zudosierte Flüssigkeit über ein und denselben Zufluss im Bereich der Filtervorrichtung zugeführt wird, wodurch eine funktionell vorteilhafte und kompakt bauende Anlage bereitgestellt wird. Insbesondere entfällt durch diese Ausgestaltung die Notwendigkeit, Verzweigungen und Ventilsteuerungen für die biozidhaltige, kalklösende Flüssigkeit bereitzustellen. Durch den solcher Art eingesetzten spülbaren Filter werden somit spezifische Probleme bei der Filterung von Grauwasser wie Keimaufwuchs oder Verstopfung durch Verkalkung vermieden. Dies kann insbesondere durch eine zeitgesteuerte Spülung des Filters mit biozldhaltiger, kalklösender Flüssigkeit erfolgen, wobei ergänzend in den gleichen Spülwasserzufluss eine zeit- und / oder ereignisgesteuerte Dosierung der biozidhaltigen, kalklösenden Flüssigkeit zur Behandlung des Grauwassers, welches dem Spülwasserbehälter zugeführt wird, integriert sein kann.

Die Dosiervorrichtung ist mit dem Spülwasserbehälterzulauf fluidtechnisch verbunden. In einer weiteren bevorzugten Ausuhrungsform ist die Dosiervorrichtung mit dem Spülwasserbehälter fluidtechnisch verbunden. Der Spülwasserbehälterzulauf kann eine an den Spülwasserbehälter angeschlossene Zulaufleitung oder eine Öffnung in dem Spülwasserbehälter sein. Die erfindungsgemäße Dosiervorrichtung ist entsprechend bevorzugt mit der Spülwasserbehätterzulaufleitung oder der Spülwasserbehälterzulauföffnung verbunden. Bevorzugt ist die Spülwasserbehälterzulaufleitung ausgestaltet, um mit dem Waschbecken verbunden zu werden. Die mit dem Spülwasserbehälterzulauf verbundene Dosiervorrichtung ist ausgestaltet, um das Grauwasser durch Zuführen des kalklösenden und/oder bakteriziden Mittels aufzubereiten. Das kalklösende und/oder bakterizide Mittel ist bevorzugt eine Flüssigkeit, die kontinuierlich oder in bestimmten Zeitabständen und/oder bei bestimmten Ereignissen dem Grauwasser zugeführt wird. Erfindungsgemäß kann die Dosiervorrichtung das kalklösende und/oder bakterizide Mittel dem Grauwasser in dem Spülwasserbehälterzulauf oder in dem Spülwasserbehälter selbst zuführen. Das kalklösende und/oder bakterizide Mittel kann alternativ ein Pulver, ein Tab oder dergleichen sein. Durch Aufbereiten des Grauwassers im Spülwasserbehälterzulauf und/oder in dem Spülwasserbehälter wird erfindungsgemäß erreicht, dass die verstopfenden und bakterienwuchsfördernden Eigenschaften des aufbereiteten Grauwassers reduziert werden, sodass das aufbereitete Grauwasser im Spülwasserbehälter als Spülwasser für die Toilette bevorratet ist. Die Menge an zu transportierendem Wasser für ein mobiles Toiletten- bzw. Waschraumsystem kann so deutlich reduziert werden.

Bevorzugt ist die Dosiervorrichtung ausgestaltet, um das kalklösende und/oder bakterizide Mittel regelmäßig, insbesondere kontinuierlich und/oder in bestimmten Zeitabständen, dem Grauwasser zuzuführen. Bevorzugt wird das kalklösende und/oder bakterizide Mittel in bestimmten Zeitabständen und für bestimmte Zeitdauern dem Grauwasser im Spülwasserbehälterzulauf und/oder im Spülwasserbehälter zugeführt. Auch ist es bevorzugt, dass die Dosiervorrichtung aktiviert wird, um das kalklösende und/oder bakterizide Mittel dem Grauwasser zuzuführen, wenn der Wasserzulauf des Waschbeckens deaktiviert wird und/oder das Waschbecken von Grauwasser geleert ist. Ferner ist es bevorzugt, dass die Dosiervorrichtung ausgestaltet ist, um das kalklösende und/oder bakterizide Mittel nach einer bestimmten Grauwasserdurchlaufmenge dem Spülwasserbehälterzulauf zuzuführen. Erfindungsgemäß wird vorteilhaft erreicht, dass aufbereitetes Grauwasser stets mit einer gleichen Qualität bereitgestellt werden kann, die über einen längeren Zeitraum gehalten wird.

Bevorzugt weist das Spülwasserbehältersystem ferner einen Sensor zum Bestimmen eines Ereignisses und/oder eines Füllstandes des Spülwasserbehälters und eine Steuereinheit zum Steuern der Dosiervorrichtung auf und die Steuereinheit ist ausgestaltet, um in Abhängigkeit von dem bestimmten Ereignis und/oder Füllstand die Dosiervorrichtung zu veranlassen, das kalklösende und/oder bakterizide Mittel dem Grauwasser zuzuführen. Ein Ereignis ist beispielsweise ein Erreichen eines Füllstandes bzw. ein Unterschreiten eines Füllstandes, welches durch den Sensor indiziert ist und welches bevorzugt einen Nachlauf mit Frischwasser und so eine Dosierung des kalklösenden/bioziden Mittels auslöst. Eine solche Ausführungsform ist eine Ereignis-gesteuerte Dosierung. Alternativ oder ergänzend ist es bevorzugt, dass zeitgesteuert dosiert wird, d.h. wenn über eine bestimmte oder zu bestimmende Zeit t nicht ein Ereignis (z.B. Erreichen eines Füllstandes bzw. ein Unterschreiten eines Füllstandes) eingetreten ist, wird die Dosierung gestartet. Bevorzugt wird bei dieser Ausführungsform die Dosierung mit einer Minimalmenge an Frischwasser gestartet, nur um die Dosiervorrichtung zu betreiben. Das Ereignis kann das An- oder Abstellen eines Frischwasserzulaufs für das Waschbecken bzw. eine bestimmte an das Waschbecken ausgegebene Frischwassermenge sein. Das Ereignis kann ferner die Aktivierung der Spülung der Toilette sein, wodurch das Spülwasserbehältersystem erkennt, dass der Spülwasserbehälter um einen bestimmten Betrag an aufbereitetem Grauwasser geleert wurde. Ferner ist es bevorzugt, dass der Spülwasserbehälter einen Sensor zum Bestimmen des Füllstandes des Spülwasserbehälters aufweist. Besonders bevorzugt wird die dem Grauwasser zuzuführende Menge des kalklösenden und/oder bakteriziden Mittels in Abhängigkeit von dem bestimmten Füllstand dem Spülwasserbehälter bestimmt. Vorteilhaft wird durch einen oder mehrere Sensoren erreicht, dass der Betrieb der Toilettenspülung mit gleichbleibender Qualität über einen langen Zeitraum hinweg sichergestellt werden kann.

Besonders bevorzugt weist die Dosiervorrichtung einen Kolben zum Dosieren des kalklösenden und/oder bakteriziden Aufbereitungsmittels auf. Eine mittels mechanischer Mittel (insbesondere des Kolbens) geregelte Dosiervorrichtung weist den Vorteil auf, dass auf ein zusätzliches Systemelement wie z.B. eine elektronische Steuereinheit verzichtet werden kann. Ein autarker Betrieb des erfindungsgemäßen Spülwasserbehältersystems ist gewährleistet. Die Dosierung erfolgt bevorzugt über den Hub des Kolbens in der Dosiervorrichtung, welcher bevorzugt allein durch den Wasserdruck des durchströmenden Mediums und entgegengesetzter Federkraft bewegt wird bzw. auf einer Seite des Kolbens mit dem Wasserdruck in Fluidverbindung steht und somit beaufschlagt ist. Auf der anderen Seite steht der Kolben mit dem Vorratsbehälter in Verbindung, vorzugsweise über ein Rückschlagventil, welches eine Durchströmung in Richtung des Vorratsbehälters verhindert. Die Aktivierung einer Pumpe erfolgt bevorzugt allein über vor- bzw. nachgeschaltete Ventile, die einen Wasserdurchfluss durch die Dosiervorrichtung steuern. Dabei wird durch den Wasserdruck eine Kraft auf den Kolben ausgeübt, die vorzugsweise diesen gegen die Federkraft zurück drückt. Bei Absinken, insbesondere Wegfall des Wasserdrucks durch Schließen eines entsprechenden Ventils in der Wasserleitung, erfolgt die Vorwärtsbewegung des Kolbens durch die Federkraft. Das Zylindervolumen wird frei gegeben und durch den entstehenden Unterdruck wird aus dem Vorratsbehälter (Beutel) die Dosierflüssigkeit angesaugt. Im nächsten Zyklus wird der Kolben durch den Wasserdruck wieder nach zurück gedrückt und die Dosierflüssigkeit wird über eine Fluidleitung mit Rückschlag (Schnabel-) ventil aus dem Zylinderraum in den Spülwasserstrom gedrückt. Um das Dosiervolumen zu bestimmen ist vorzugsweise eine Einstellschraube vorgesehen, die das Zylindervolumen verringern bzw. vergrößern kann.

Bevorzugt weist das Spülwasserbehältersystem eine Steuereinheit zum Steuern des Spülwasserbehältersystems auf. Es ist bevorzugt, dass die Steuereinheit den Wasserzulauf des mobilen Waschraumsystems und des Frischwassertanks, ein Überflussventil, ein Druckluftventil und/oder ein Schmutzwassertankventil steuert. Insbesondere ist die Steuereinheit ausgestaltet, um bei Bedarf (falls z. B. der Füllstand des Spülwasserbehälters unter einem bestimmten Pegel liegt) den Frischwassertank zu veranlassen, Frischwasser an den Spülwasserbehälter abzugeben. Vorteilhaft wird so erreicht, dass selbst in dem Fall, dass nicht genügend aufbereitetes Grauwasser in dem Spülwasserbehälter zur Spülung der Toilette bereitsteht, die Spülfähigkeit der Toilette durch Zuführen von Frischwasser aus dem Frischwassertank sichergestellt ist.Bevorzugt weist das Spülwasserbehältersystem ferner einen Filter zum Filtern des Grauwassers, insbesondere zum Filtern von Partikeln aus dem Grauwasser, auf, wobei der Filter insbesondere in dem Spülwasserbehälterzulauf angeordnet ist. Der Filter ist bevorzugt ausgestaltet, um kleinere Partikel wie z. B. Hautschuppen, Haare und Seifenreste aus dem Grauwasser zu filtern. Bevorzugt ist der Filter ausgestaltet, um an einen Grauwasserablauf am Waschbecken angeschlossen zu werden. Ferner ist es bevorzugt, dass der Filter in dem Grauwasserfluss zwischen Dosiervorrichtung und Spülwasserbehälterzulauf angeordnet ist. Vorteilhaft kann erreicht werden, dass dem Grauwasser im Bereich des Filters das kalklösende und/oder bakterizide Mittel zugeführt wird, sodass das gefilterte Grauwasser gleichzeitig aufbereitet wird. Bevorzugt ist der Filter in dem Spülwasserbehälterzulauf angeordnet. In einer bevorzugten Ausführungsform ist der Filter ein Filterkorb. Der Filter weist bevorzugt ein Filtergewebe auf. Das Filtergewebe ist bevorzugt bakterizid ausgestaltet. Das Filtergewebe weist bevorzugt Silberfäden auf. Um in dem Filter bzw. dem Filterkorb Bakterienaufwuchs und Akkumulation von Kalkseifen zu hemmen, ist erfindungsgemäß bevorzugt, dass die Dosiervorrichtung regelmäßig eine Flüssigkeit mit kalklösenden und bakteriziden Eigenschaften zum Grauwasserstrom in den Filter hinzudosiert. Im Bereich des Wasserzulaufs, in dem der Filter angeordnet ist, wird das Grauwasser aus dem Waschbecken somit einerseits gefiltert und andererseits durch Zuführen des kalklösenden und/oder bakteriziden Mittels aufbereitet. Vorteilhaft wird erreicht, dass das dem Spülwasserbehälter zugeleitete Grauwasser bereits gefiltert und aufbereitet ist und somit unmittelbar der Spülung der Toilette bereitsteht.

Bevorzugt weist das Spülwasserbehältersystem ferner einen Geruchsverschluss auf, der in dem Spülwasserbehälterzulauf angeordnet ist. In einer bevorzugten Ausführungsform ist der Geruchsverschluss ausgestaltet, um mit dem Grauwasserabfluss des Waschbeckens verbunden zu werden. Bevorzugt wird so das Grauwasser zunächst über den Geruchsverschluss, dann optional über den Filter und schließlich dem Spülwasserbehälter zugeführt. In einer alternativen Ausführungsform ist der Geruchsverschluss im Spülwasserbehälterzulauf zwischen dem Filter und dem Spülwasserbehälter angeordnet. In einer bevorzugten Ausführungsform ist der Geruchsverschluss ein Ventil oder einen Siphon. Erfindungsgemäß wird vorteilhaft erreicht, dass eine Geruchsbelästigung für den Benutzer dadurch vermieden wird, dass das Grauwasser nach Abfluss aus dem Waschbecken durch den Geruchsverschluss geführt wird.

Bevorzugt weist das Spülwasserbehältersystem einen Sensor zum Bestimmen eines Füllstandes des Spülwasserbehälters für einen Spülbetrieb der Toilette und eine Steuereinheit zum Steuern des Spülwasserbehälters auf und die Steuereinheit ist ausgestaltet, um den Spülwasserbehälter zu veranlassen, Frischwasser aus einem Frischwasserzulauf aufzunehmen, wenn der bestimmte Füllstand unterhalb eines vorbestimmten Grenzwert liegt. Bevorzugt ist die Steuereinheit ausgestaltet, um ein oder mehrere Eingangs- und/oder Ausgangsventil(e) des Spülwasserbehälters zu steuern. Bevorzugt ist der Sensor mit einer Steuereinheit verbunden. Die Steuereinheit kann die Steuereinheit der Toilette sein und/oder des Spülwasserbehältersystems sein. Die Steuereinheit kann in Abhängigkeit von dem Füllstand des Spülwasserbehälters veranlassen, das Frischwasser aus dem Frischwassertank oder dem Frischwasserzulauf dem Spülwasserbehälter zugeführt wird, um sicherzustellen, dass stets genügend Spülwasser für die Toilette im Spülwasserbehälter bereitgestellt ist.

Bevorzugt ist vorgesehen, dass das Spülwasserbehältersystem einen vorzugsweise als Bajonettverschluss ausgebildeten Aufbereitungsmittelanschluss an der Dosiervorrichtung zum Verbinden mit einem Vorratsbehälter aufweist und weiterhin einen als Beutel ausgebildeten Vorratsbehälter für das Aufbereitungsmittel mit einer entsprechend zum Anschluss an den Aufbereitungsmittelanschluss ausgebildeten Abgabeöffnung umfasst. Die Ausgestaltung der Verbindung zwischen Dosiervorrichtung und Vorratsbehälter ist besonders vorteilhaft als Bajonettverschluss ausgestaltet, der eine zuverlässig dichte Verbindung durch eine besonders einfache und schnelle Steck-Dreh-Bewegung erreicht. Der Verbindungsanschluss zwischen Dosiervorrichtung und Vorratsbehälter ist erfindungswesentlich so ausgestaltet, dass ein schnelles und einfaches Auswechseln des Vorratsbehälters ermöglicht wird und die Dosiervorrichtung dichtend mit dem Vorratsbehälter verbunden werden kann. Ferner ist es besonders vorteilhaft, den Vorratsbehälter als insbesondere flexiblen Beutel auszugestalten, da dieser wenig Raum einnimmt, flexibel zwischen anderen Komponenten des Spülwasserbehältersystems angeordnet werden kann und durch Anpassen seiner äußeren Form das Aufbereitungsmittel ohne Belüftungsmaßnahmen restlos abgeben kann.

In einem weiteren Aspekt bezieht sich die Erfindung auf ein Spülwassersystem einer mobilen Toilette, insbesondere einer mobilen Vakuumtoilette, mit einem erfindungsgemäßen Spülwasserbehältersystem nach einem der vorstehenden Ansprüche, und der mobilen Toilette, insbesondere der mobilen Vakuumtoilette. Bevorzugt weist das Spülwassersystem ferner das Waschbecken auf. Die vorstehend erläuterten Ausführungsformen und Vorteile des erfindungsgemäßen Spülwasserbehältersystems gelten für das erfindungsgemäße Spülwassersystem in analoger Weise.

In einem weiteren Aspekt betrifft die Erfindung ein Verfahren zum Betreiben eines erfindungsgemäßen Spülwasserbehältersystems für eine mobile Toilette, insbesondere eine mobile Vakuumtoilette, mit den Schritten: Aufnehmen von Grauwasser aus einem Waschbecken, Aufbereiten des Grauwassers durch Zuführen eines kalklösenden und/oder bakteriziden Mittels, und Abgeben des aufbereiteten Grauwassers als Spülwasser an die mobile Toilette. Bevorzugt weist das Verfahren ferner den Schritt auf: Zuführen des kalklösenden und/oder bakteriziden Mittels aus einer Dosiervorrichtung an einen Spülwasserbehälter und/oder Spülwasserbehälterzulauf. Bevorzugt weist das Verfahren ferner den Schritt auf: regelmäßiges, insbesondere kontinuierliches und/oder in bestimmten Zeitabständen, Zuführen des kalklösenden und/oder bakteriziden Mittels. Bevorzugt weist das Verfahren ferner die Schritte auf: Bestimmen eines Ereignisses und/oder eines Füllstandes eines Spülwasserbehälters und Steuern des Zuführens des kalklösenden und/oder bakteriziden Mittels in Abhängigkeit von dem bestimmten Ereignis und/oder Füllstand. Bevorzugt weist das Verfahren ferner den Schritt auf: Filtern des Grauwassers, insbesondere Filtern von Partikeln aus dem Grauwasser. Bevorzugt weist das Verfahren ferner die Schritte auf: Bestimmen eines Füllstandes eines Spülwasserbehälters für einen Spülbetrieb der mobilen Toilette und Steuern einer Frischwasserausnahme in den Spülwasserbehälter aus einem Frischwasserzulauf, wenn der bestimmte Füllstand unterhalb eines vorbestimmten Grenzwert liegt. Bevorzugt weist das Verfahren ferner den Schritt auf: Verbinden der Dosiervorrichtung mit dem Spülwasserbehälter und/oder dem Spülwasserbehälterzulauf mittels eines Bajonettverschlusses der insbesondere beutelförmigen Dosiervorrichtung.

In einem weiteren Aspekt bezieht sich die Erfindung auf ein Verfahren zum Betreiben eines Spülwassersystems einer mobilen Toilette, insbesondere einer mobilen Vakuumtoilette, mit einem Spülwasserbehältersystem nach einem der vorstehenden Ansprüche, und der mobilen Toilette, insbesondere der mobilen Vakuumtoilette, wobei das Spülwassersystem insbesondere ferner das Waschbecken aufweist und das Verfahren ferner die Schritte des Verfahrens zum Betreiben eines erfindungsgemäßen Spülwasserbehältersystems für eine mobile Toilette, insbesondere eine mobile Vakuumtoilette, aufweist.

Die Erfindung wird im Folgenden anhand bevorzugter Ausführungsformen erläutert, die in den Figuren dargestellt sind, wobei
- Figur 1: eine erste Ausführungsform eines erfindungsgemäßen Spülwasserbehältersystems zeigt;
- Figur 2: eine zweite Ausführungsform eines erfindungsgemäßen Spülwasserbehältersystems, und
- Figur 3: eine längsgeschnittene Ansicht einer erfindungsgemäßen Filtervorrichtung zeigt.

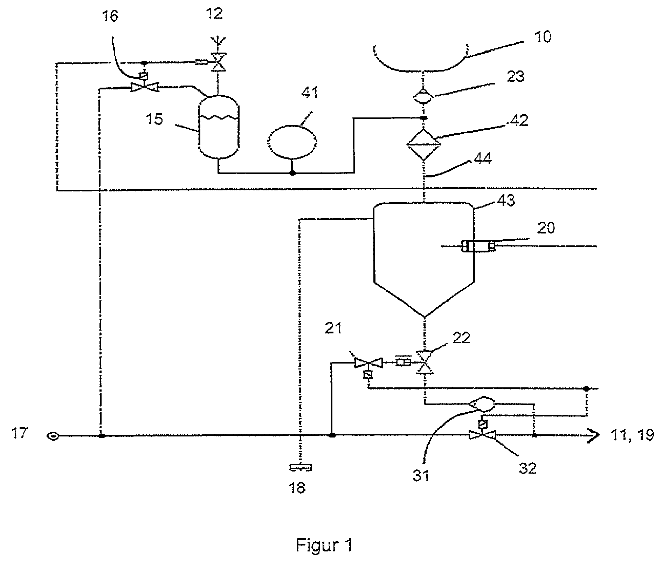

Figur 1 zeigt eine erste Ausführungsform eines erfindungsgemäßen Spülwasserbehältersystems für Spülwasser einer Toilette 11. Das Spülwasserbehältersystem weist einen Spülwasserbehälter 43 mit einem Spülwasserbehälterzulauf 44 zum Aufnehmen von Grauwasser aus einem Waschbecken 10 auf. Das Spülwasserbehältersystem weist ferner eine Dosiervorrichtung 41 auf, die mit dem Spülwasserbehälter 43 verbunden ist. Die Dosiervorrichtung 41 ist in der in Figur 1 gezeigten Ausführungsform über den Spülwasserbehälterzulauf 44 mit dem Spülwasserbehälter 43 verbunden. In einer alternativen nicht gezeigten Ausführungsform ist es ferner möglich, dass die Dosiervorrichtung 41 direkt (d. h. nicht über den Spülwasserbehälterzulauf 44) an dem Spülwasserbehälter 43 angeschlossen ist. Die Dosiervorrichtung 41 ist ausgestaltet, um das Grauwasser durch Zuführen eines kalklösenden und/oder bakteriziden Mittels aufzubereiten. In der in Figur 1 gezeigten Ausführungsform gibt die Dosiervorrichtung 41 das kalklösende und/oder bakterizide Mittel an den Spülwasserbehälterzulauf 44 aus. Der Spülwasserbehälter 43 ist zum Abgeben des aufbereiteten Grauwassers als Spülwasser an die Toilette 11 ausgestaltet.

Die Dosiervorrichtung 41 wird in der Ausführungsform der Figur 1 nicht über eine Steuereinheit betätigt, sondern die Dosierung erfolgt über den Hub eines (nicht dargestellten) Kolbens in der Dosiervorrichtung 41. Der Kolben wird allein durch den Wasserdruck des durchströmenden Mediums und entgegengesetzter Federkraft bewegt. Das Dosiervolumen wird über eine Einstellschraube bestimmt, die das Zylindervolumen verringern bzw. vergrößern kann. Die Aktivierung einer (ebenfalls nicht dargestellten) Pumpe erfolgt allein über vor- bzw. nachgeschaltete Ventile, die einen Wasserdurchfluss durch die Dosiervorrichtung 41 steuern. Dabei wird durch den Wasserdruck eine Kraft auf den Kolben ausgeübt, die diesen nach unten drückt. Bei Wegfall des Wasserdrucks durch Schließen eines entsprechenden Ventils, erfolgt die Aufwärtsbewegung durch Federkraft. Das Zylindervolumen wird frei gegeben und durch den entstehenden Unterdruck wird aus einem Vorratsbehälter(Beutel) die Dosierflüssigkeit angesaugt. Im nächsten Zyklus wird der Kolben durch den Wasserdruck wieder nach unten gedrückt und die Dosierflüssigkeit wird über ein Schnabelventil aus dem Zylinderraum in den Spülwasserstrom gedrückt.

Die Ausführungsform der Figur 1 weist ferner einen Wasserfilter 42 und einen Geruchsverschluss 23 auf. Ausgehend von dem Waschbecken 10 fließt das Grauwasser zunächst durch den Geruchsverschluss 23, dann durch den Filter 42 (wo in der Ausführungsform in Figur 1 dem Grauwasser das kalklösende und/oder bakterizide Mittel von der Dosiervorrichtung 41 zugeführt wird) und anschließend in den Spülwasserbehälter 43.

Figur 1 illustriert ferner einen Frischwasserzulauf 12, der einem Frischwassertank 15 Wasser zuführt. Der Füllstand des Frischwassertankes 15 kann über einen in Figur 1 nicht dargestellten Sensor bestimmt werden. In Abhängigkeit von dem Füllstand des Frischwassertankes 15 kann das Ventil 16 (Magnetventil, Elektromagnetventil oder Wegeventil) die Frischwasserzufuhr aus dem Frischwasserzulauf 12 steuern. Der Frischwassertank 15 kann je nach Bedarf und Füllstand dem Spülwasserbehälter 43 Frischwasser über den Spülwasserbehälterzulauf 44 bereitstellen.

Der Füllstand im Spülwasserbehälter 43 (auch als Grauwassertank bezeichnet) wird mittels eines Füllstandsensors 20 überwacht. An dem Ablauf des Grauwassertanks 43 ist ein pneumatisch gesteuertes Ventil 22 angeordnet. Die Druckluftleitung der Druckluftquelle 17 ist mit Ventil 21 verbunden und stellt die Druckluft für das pneumatisch gesteuerte Ventil 22 bereit. In der Druckluftleitung der Druckluftquelle 17 ist ferner Ventil 32 angeordnet. Je nach Ansteuerung der Ventile 21 und 32 wird das Ventil 22 geöffnet und das Grauwasser aus dem Grauwassertank 43 wird durch Rückschlagventil 31 dem Schmutzwassertank 19 bzw. der Toilette 11 zugeleitet. Figur 1 zeigt ferner einen Überlauf 18, der einen Rückfluss des Grauwassers aus dem Grauwassertank 43 in den Spülwasserbehälterzulauf 44 verhindert.

Das Handwaschbecken 10 der Figur 1 ist ein Grauwasserzulauf zu den erfindungsgemäßen Spülwasserbehältersystem. Das Grauwasser gelangt vom Waschbecken 10 mit Seifenanteilen und Resten in das Spülwasserbehältersystem. Das Ventil 23 (oder auch Siphon 23) dient als Geruchsverschluss des Grauwassertanks 43. Die Dosiervorrichtung 41 kann Flüssigkeiten mit kalklösenden und/oder bakteriziden Eigenschaften dem Grauwasser zudosieren. Ein als Filterkorb ausgebildeter Filter 42 ist in der Ausführungsform der Figur 1 mit eingearbeiteten Silberfäden im Filtergewebe ausgestattet, die von sich aus bakterizide Wirkung haben. Der GrauSpülwasserbehälter 43 ist ausgebildet, um ausreichend Spülwasser für den Toilettenbetrieb der Toilette 11 vorzuhalten. Ferner ist der Sensor 22 integriert, der einen für den Toilettenbetrieb der Toilette 11 ausreichenden Wasserstand im Grauwassertank 43 überwacht.

Im Folgenden wird ein Überblick über den Betrieb des in Figur 1 gezeigten Spülwasserbehältersystems gegeben. Das Grauwasser mit seifigen Inhaltsstoffen oder Seifenresten fließt über den Geruchsverschluss 23 und durch den Filterkorb 42. In dem Filterkorb 42 werden kleinere Partikel wie Hautschuppen, Haare und Seifenreste zurückgehalten. Die Dosiervorrichtung 41 dosiert regelmäßig eine Flüssigkeit mit kalklösenden und bakteriziden Eigenschaften zum Grauwasserstrom hinzu, um in dem Filterkorb 42 und im gesamten erfindungsgemäßen Spülwasserbehältersystem bzw. Spülwassersystem einen Bakterienaufwuchs und eine Akkumulation von Kalkseifen zu hemmen. Erfindungsgemäß kann die Zudosierung zeit- und/oder ereignisgesteuert erfolgen. Verstopfungen in Folge von Kalkseifenausfällungen oder Geruchsprobleme in Folge von Bakterienaufwuchs in Grauwassersystemen können erfindungsgemäß vorteilhaft verhindert werden.

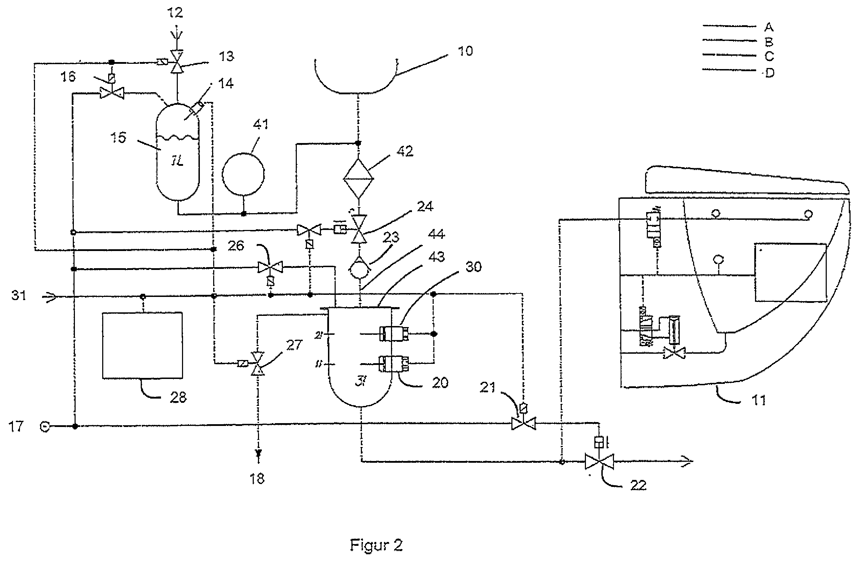

Figur 2 zeigt eine zweite Ausführungsform eines erfindungsgemäßen Spülwasserbehältersystems, welches Teil eines erfindungsgemäßen Spülwassersystems ist. Für Einheiten mit identischen Bezugszeichen gelten die obigen Erläuterungen der Figur 1 in analoger Weise. Die Verbindungen zwischen den in Figur 2 gezeigten Einheiten bezeichnen folgende Arten der Wasser-, Druckluft- bzw. Stromleitungen: "A" bezeichnet eine Grauwasserleitung, "B" bezeichnet eine Frischwasserleitung, "C" bezeichnet eine Druckluftleitung und "D" bezeichnet eine elektrische Leitung.

Figur 2 zeigt die Dosiervorrichtung 41, die mit dem Spülwasserbehälter 43 verbunden ist. Der Spülwasserbehälter 43 weist einen Spülwasserbehälterzulauf 44 auf, der zwischen Dosiervorrichtung 41 und Spülwasserbehälter 43 angeordnet ist. Im Spülwasserbehälterzulauf 44 sind in Richtung des Grauwasserflusses vom Waschbecken 10 in Richtung des Spülwasserbehälters 43 zunächst die Zuleitung der Dosiervorrichtung 41, dann der Wasserfilter 42, dann ein Ventil (Magnetventil, Elektromagnetventil, Wegeventil) 24 und der Geruchsverschluss 23 angeordnet. Frischwasser wird von der Frischwasserquelle 12 über das Ventil 13 dem Frischwassertank 15 zugeleitet. Der Frischwassertank 15 ist mit dem Spülwasserbehälterzulauf 44 verbunden. Der Frischwassertank 15 weist einen Füllstandsensor 14 auf, der das Ventil 13 in Abhängigkeit von dem Füllstand steuert. Der Frischwassertank 15 hat in der in Figur 2 gezeigten Ausführungsform ein Füllvermögen von 1 Liter. Durch Zuführen von Druckluft aus der Druckluftquelle 17 zu dem Ventil 16 wird das Frischwasser aus dem Frischwassertank 15 bei geöffnetem Ventil 16 gedrückt, um es dem Spülwasserbehälter 43 zuzuführen.

Das Ventil 24 wird über die Druckluft der Druckluftquelle 17 gesteuert und ermöglicht die Freigabe bzw. den Verschluss des Spülwasserbehälterzulaufs 44. Das Ventil 24 wird durch das Ventil 25 gesteuert, welches mit einer Steuereinheit 28 verbunden ist. Der Steuereinheit 28 wird Energie von der Energiequelle 31 bereitgestellt. Die Steuereinheit 28 steuert den Betrieb des Ventiles 25 und damit den Betrieb des Druckluftventiles 24, welches den Spülwasserbehälterzulauf 44 freigeben kann. Die Steuereinheit 28 ist mit dem Frischwasserfüllstandsensor 14 verbunden und steuert die Frischwasserzufuhr und -ablass in und aus dem Frischwassertank 15 über die Ventile 13 und 16. Die Steuereinheit 28 erhält von den Sensoren 20 und 30 Informationen über den Füllstand des Spülwasserbehälters 43. Der Spülwasserbehälter 43 hat ein Fassungsvermögen von drei Litern und die Füllstände von 1 Liter bzw. 2 Litern werden von den Sensoren 20 bzw. 30 der Steuereinheit 28 angezeigt. Übersteigt der Füllstand des Spülwasserbehälters 43 einen vorbestimmten Pegel, wird das überschüssige Grauwasser durch Überlauf 18 abgeführt. Dazu wird das Ventil 27 durch die Steuereinheit 28 geöffnet, sodass der Abfluss zu der Überlaufsenke 18 freigegeben ist.

Analog dem Ventil 16 des Frischwassertankes 15 wird das Ventil 26 des Spülwasserbehälters 43 von der Steuereinheit 28 angesteuert. Ist das Ventil 26 geöffnet, drückt der erhöhte Luftdruck in dem Spülwasserbehälter 43 dessen Inhalt aus dem Spülwasserbehälter 43.

Die Steuereinheit 28 steuert ferner das Ventil 21, welches die Druckluftzufuhr zu dem Ventil 22 freigeben kann. Das Ventil 22 öffnet und schließt den Abfluss zu dem Schmutzwassertank 19. Zwischen dem Abfluss des Spülwasserbehälters 43 und dem Ventil 22 führt eine Grauwasserleitung zu der schematisch dargestellten Toilette 11, die weitere Ventile, Spüldüsen, eine Steuereinheit und dergleichen aufweisen kann.

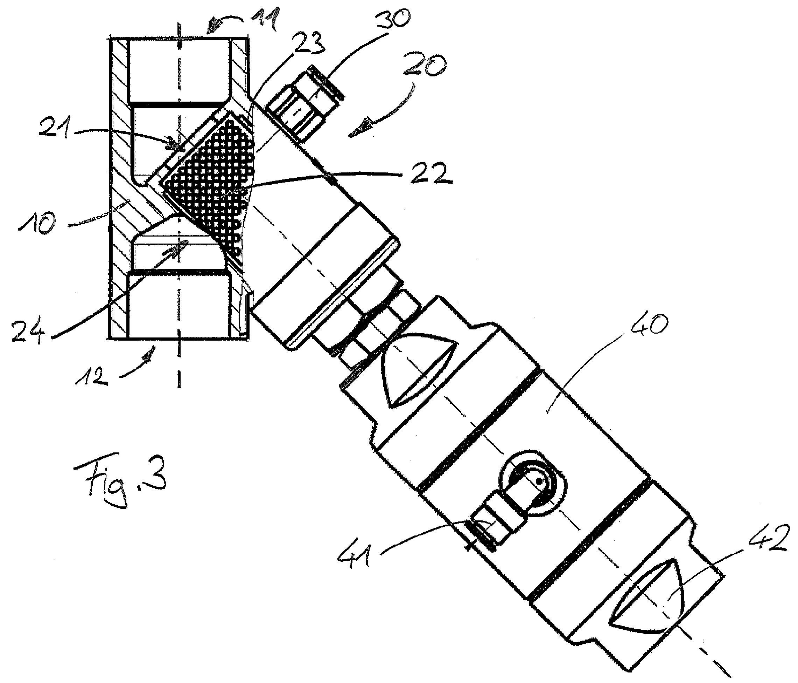

Figur 3 zeigt ein Detail eines erfindungsgemäßen Spülwasserbehältersystems. Gezeigt ist eine Filtervorrichtung mit integrierter Dosiervorrichtung. Die Filtervorrichtung umfasst ein Rohreinsatzstück 10 mit einem Zulauf 11 und einem Ablauf 12, durch welche Grauwasser aus einem Spülbecken hindurchgeleitet werden. An dem Einsatzstück 10 ist einstückig eine Filterstufe 20 in einer schrägabwärts gerichteten Achsrichtung angeordnet. Die Filterstufe 20 umfasst einen zentral axialen Zulauf 21, der in einen Filterkorb 22 hineinführt. Der Filterkorb 22 weist eine Vielzahl radial gerichteter Öffnungen in seiner Umfangsfläche auf. Der Filterkorb 22 ist umgeben von einem umfänglichen Ringspaltraum 23, in den das in die axiale Eintrittsöffnung 21 eintretende Grauwasser in gefilterter Weise durch den Filterkorb hindurch eintreten kann. Aus diesem Ringspaltraum 23 kann das Grauwasser durch eine Ablauföffnung 24 in den unteren Teil des Rohreinsatzstückes 10 gelangen und schließlich durch die Auslassöffnung 12 austreten.

Eine Spülwasserzuflussöffnung 30 ist an der Filterstufe 20 in radialer Richtung angeordnet und mündet in den Ringspaltraum 23 um den Filterkorb 22. Die Spülwasserzuflussöffnung 30 steht daher in direkter Fluidverbindung mit der Auslassöffnung 24 für das gefilterte Grauwasser und ist mit der Einlassöffnung 21 in den Filterkorb hinein mittels der Öffnungen des Filterkorbs 22 verbunden.

Über die Spülwasserzuflussöffnung 30 kann ereignis- oder zeitgesteuert eine biozidhaltige, kalklösende Flüssigkeit dem durchfließenden Grauwasser zudosiert werden, um Keimaufwuchs und Ausbildung von Kalkseifen zu verhindern, was nachgeschaltete Komponenten flussabwärts der Auslassöffnung 12 in ihrer Funktion beeinträchtigen könnte.

Die Spülwasserzuflussöffnung 30 dient weiterhin für eine Rückwärtsspülung des Filterkorbs 22. Diese Rückwärtsspülung wird durch eine entsprechende Steuervorrichtung in regelmäßigen Zeitabständen, die größer sind als die Zudosierung der biozidhaltigen, kalklösenden Flüssigkeit in den Grauwasserstrom, ausgelöst.

Bei der Rückwärtsspülung des Filterkorbs 22 wird ein kurzer, kräftiger Strom einer biozidhaltigen, kalklösenden Flüssigkeit über die Spülwasserzuflussöffnung 30 in den Ringspaltraum 23 zugegeben und hierdurch der Filterkorb 22 in Rückwärtsdurchströmung mit Druck beaufschlag. Zugleich wird über eine Spülwasserablauföffnung 41, die an einem Sammelbehälter 40 angeordnet ist, das Spülwasser abgezogen. Der Sammelbehälter 40 ist axial an dem der Eintrittsöffnung 21 gegenüberliegenden Ende an die Filterstufe 20 angesetzt. Er weist an seinem unteren Ende ein Auslassventil 42 auf, welches als Quetschventil ausgeführt ist und dazu dient, um in dem Sammelbehälter gesammelte Feststoffpartikel aus dem Sammelbehälter 40 zu entleeren.

Durch regelmäßige Rückspülvorgänge über die Öffnungen 30, 41 kann somit der Filterkorb 22 funktionsfähig gehalten werden und nur in sehr langen Zeitintervallen wird eine Reinigung des Sammelbehälters durch Abführen der darin gesammelten Feststoffe über das Ventil 42 notwendig.

## Patentansprüche

1. Spülwasserbehältersystem für Spülwasser einer mobilen Toilette (11), insbesondere einer mobilen Vakuumtoilette (11), mit
- einem Spülwasserbehälter (43) mit einem Spülwasserbehälterzulauf (44),
- wobei der Spülwasserbehälter (43) ausgebildet ist, um Grauwasser aus einem Waschbecken (10), welches insbesondere ein Handwaschbecken oder ein Duschwaschbecken ist, aufzunehmen,
- einer Filtervorrichtung (42) mit einem Filterelement, das in eine Verbindungsleitung zwischen dem Waschbecken (10) und dem Spülwasserbehälter (43) eingesetzt ist,
- einer Dosiervorrichtung (41) die mit dem Spülwasserbehälter (43) fluidtechnisch verbunden ist und ausgestaltet ist, um das Grauwasser durch Zuführen eines kalklösenden und/oder bakteriziden Aufbereitungsmittels aufzubereiten,
- wobei der Spülwasserbehälter (43) zum Abgeben des aufbereiteten Grauwassers als Spülwasser an die mobile Toilette (11) ausgestaltet ist,
**dadurch gekennzeichnet, dass** die Dosiervorrichtung (41) an der Filtervorrichtung angeordnet ist, und die Filtervorrichtung (42) ferner einen Sammelbehälter (40) umfasst, der ausgebildet ist, um durch die Filtervorrichtung gefilterte Feststoffe aufzunehmen, wobei die Filtervorrichtung weiterhin eine Spüleinrichtung umfasst, welche einen Spülzufluss (30) und einen Spülabfluss (41) aufweist und ausgebildet ist um im Bereich des Filterelements gesammelte Feststoffe in den Sammelbehälter (40) zu spülen, und der Spülzufluss (30) in Doppelfunktion als Zufluss für das Zuführen eines kalklösenden und/oder bakteriziden Aufbereitungsmittels der Dosiervorrichtung (41) ausgebildet und angeordnet ist.

2. Spülwasserbehältersystem nach Anspruch 1,
wobei die Dosiervorrichtung (41) mit dem Spülwasserbehälterzulauf (44) fluidtechnisch zur Zuführung des Aufbereitungsmittels in eine an den Spülwasserbehälterzulauf (44) angeschlossene Zuleitung verbunden ist.

3. Spülwasserbehältersystem nach einem der vorstehenden Ansprüche,
wobei die Dosiervorrichtung (41) ausgestaltet ist, um das kalklösende und/oder bakterizide Mittel regelmäßig, insbesondere kontinuierlich und/oder in bestimmten Zeitabständen, dem Grauwasser zuzuführen.

4. Spülwasserbehältersystem nach einem der vorstehenden Ansprüche,
wobei das Spülwasserbehältersystem ferner einen Sensor (20, 30) zum Bestimmen eines Ereignisses und/oder eines Füllstandes des Spülwasserbehälters (43) und eine Steuereinheit (28) zum Steuern der Dosiervorrichtung (41) aufweist und die Steuereinheit (28) mit dem Sensor (20, 30) signaltechnisch gekoppelt und ausgestaltet ist, um in Abhängigkeit von dem bestimmten Ereignis und/oder Füllstand die Dosiervorrichtung (41) zu veranlassen, das kalklösende und/oder bakterizide Mittel dem Grauwasser zuzuführen.

5. Spülwasserbehältersystem nach einem der vorstehenden Ansprüche,
wobei der Filter (42) ein Filtergewebe aufweist, welches insbesondere bakterizid ist und/oder Silberfäden aufweist.

6. Spülwasserbehältersystem nach einem der vorstehenden Ansprüche,
wobei das Spülwasserbehältersystem ferner einen Geruchsverschluss (23), welcher insbesondere ein Ventil oder ein Siphon ist, aufweist, der in dem Spülwasserbehälterzulauf (44) angeordnet ist.

7. Spülwasserbehältersystem nach einem der vorstehenden Ansprüche,
wobei das Spülwasserbehältersystem einen Mindestfüllstandsensor (20, 30) zum Bestimmen eines Füllstandes des Spülwasserbehälters (43) für einen Spülbetrieb der mobilen Toilette (11) und eine Steuereinheit zum Steuern zumindest eines Ventils, welches den Zufluss zum Spülwasserbehälter (43) steuert, aufweist und die Steuereinheit (28) ausgestaltet ist, um den Spülwasserbehälter (43) zu veranlassen, Frischwasser aus einem Frischwasserzulauf aufzunehmen, wenn der bestimmte Füllstand unterhalb eines vorbestimmten Grenzwert liegt.

8. Spülwasserbehältersystem nach einem der vorstehenden Ansprüche,
**gekennzeichnet durch** einen vorzugsweise als Bajonettverschluss ausgebildeten Aufbereitungsmittelanschluss an der Dosiervorrichtung (41) zum Verbinden mit einem Vorratsbehälter, und einen als Beutel ausgebildeten Vorratsbehälter für das Aufbereitungsmittel mit einer entsprechend zum Anschluss an den Aufbereitungsmittelanschluss ausgebildeten Abgabeöffnung.

9. Spülwasserbehältersystem nach dem vorstehenden Anspruch,
**gekennzeichnet durch** einen Dosierkolben, der auf einer ersten Seite mit dem Spülwasserstrom in Fluidverbindung steht und auf seiner hierzu gegenüberliegenden Seite mit dem Vorratsbehälter in Fluidverbindung steht und vorzugsweise über eine Feder in einer Richtung entgegen der auf die erste Seite wirkenden Druckkraft vorgespannt wird, wobei der Dosierkolben auf der zweiten Seite einen Dosierraum begrenzt, der über eine Fluidleitung mit dem Spülwasserbehälter in Fluidverbindung steht.

10. Spülwassersystem einer mobilen Toilette (11), insbesondere einer mobilen Vakuumtoilette (11), mit
einem Spülwasserbehältersystem nach einem der vorstehenden Ansprüche, und der mobilen Toilette (11), insbesondere der mobilen Vakuumtoilette (11).

11. Spülwassersystem nach Anspruch 10,
wobei das Spülwassersystem ferner das Waschbecken (10) aufweist.

12. Verfahren zum Betreiben eines Spülwasserbehältersystems nach einem der vorstehenden Ansprüche 1-9, wobei das Verfahren die Schritte aufweist: Aufnehmen von Grauwasser aus einem Waschbecken (10), Aufbereiten des Grauwassers durch Zuführen eines kalklösenden und/oder bakteriziden Mittels, und Abgeben des aufbereiteten Grauwassers als Spülwasser an die mobile Toilette.

## Claims

1. Flush water container system for flush water of a mobile toilet (11), in particular a mobile vacuum toilet (11), comprising
- a flush water container (43) with a flush water container inlet (44),
- which flush water container (43) is designed to receive grey water from a wash basin (10), in particular a hand wash basin or a shower basin,
- a filter device (42) with a filter element inserted in a connecting line between the wash basin (10) and the flush water container (43),
- a metering device (41) which fluidically communicates with the flush water container (43) and which is designed to treat the grey water by introducing a descaling and/or bactericidal treatment agent,
- and the flush water container (43) is designed to supply the mobile toilet (11) with the treated grey water as flush water,
**characterised in that** the metering device (41) is disposed on the filter device and the filter device (42) further comprises a collection tank (40) which is designed to receive solids filtered by the filter device and the filter device further comprises a
flushing device which has a flush inflow (30) and a flush outflow (41) and is designed to flush solids collected in the region of the filter element into the collection tank (40), and the flush inflow (30) is designed and disposed so as to fulfil a dual function as an inflow for supplying the metering device (41) with a descaling and/or bactericidal treatment agent.

2. Flush water container system as claimed in claim 1,
wherein the metering device (41) fluidically communicates with the flush water container inlet (44) in order to deliver the treatment agent into an intake line connected to the flush water container inlet (44).

3. Flush water container system as claimed in one of the preceding claims,
wherein the metering device (41) is designed to introduce the descaling and/or bactericidal agent into the grey water regularly, in particular continuously and/or at specific time intervals.

4. Flush water container system as claimed in one of the preceding claims,
wherein the flush water container system further comprises a sensor (20, 30) for detecting an event and/or a filling level of the flush water container (43) and a control unit (28) for controlling the metering device (41), and the control unit (28) is connected to the sensor (20, 30) so as to communicate by signals and is configured to prompt the metering device (41) to introduce the descaling and/or bactericidal agent into the grey water as a function of the detected event and/or filling level.

5. Flush water container system as claimed in one of the preceding claims,
wherein the filter (42) has a filter fabric which in particular is bactericidal and/or has silver threads.

6. Flush water container system as claimed in one of the preceding claims,
wherein the flush water container system further comprises an odour trap (23) disposed in the flush water container inlet (44) which is a valve or a siphon in particular.

7. Flush water container system as claimed in one of the preceding claims,
wherein the flush water container system has a minimum level sensor (20, 30) for detecting a filling level of the flush water container (43) for flushing the mobile toilet (11) and a control unit for controlling at least one valve which controls the inflow to the flush water container (43), and the control unit (28) is configured to prompt the flush water container (43) to receive fresh water from a fresh water inlet if the detected filling level lies below a predefined threshold value.

8. Flush water container system as claimed in one of the preceding claims,
**characterised by** a treatment agent connector on the metering device (41), preferably in the form of a bayonet connector, for providing a connection to a supply container, and a supply container for the treatment agent in the form of a bag with a discharge opening of a matching design for providing a connection to the treatment agent connector.

9. Flush water container system as claimed in the preceding claim,
**characterised by** a metering piston which fluidically communicates with the flush water flow on a first side and fluidically communicates with the supply container on its side lying opposite thereto, and which is preferably biased by a spring in a direction opposite the compressive force acting on the first side, and the metering piston bounds a metering chamber on the second side which fluidically communicates with the flush water container via a fluid line.

10. Flush water system of a mobile toilet (11), in particular a mobile vacuum toilet (11), comprising
a flush water container system as claimed in one of the preceding claims and the mobile toilet (11), in particular the mobile vacuum toilet (11).

11. Flush water system as claimed in claim 10,
wherein the flush water system further comprises the wash basin (10) .

12. Method of operating a flush water container system as claimed in one of preceding claims 1-9, wherein the method comprises the steps : receiving grey water from a wash basin (10), treating the grey water by introducing a descaling and/or bactericidal agent and supplying the mobile toilet with the treated grey water as flush water.

## Revendications

1. Système de réservoir d'eau de rinçage pour de l'eau de rinçage d'une toilette mobile (11), en particulier d'une toilette à vide mobile (11) avec
- un réservoir d'eau de rinçage (43) avec une amenée de réservoir d'eau de rinçage (44),
- le réservoir d'eau de rinçage (43) étant réalisé afin de recevoir de l'eau grise provenant d'un lavabo (10) qui est en particulier un lave-mains ou une douche,
- un dispositif de filtration (42) avec un élément de filtre qui est inséré dans une conduite de liaison entre le lavabo (10) et le réservoir d'eau de rinçage (43),
- un dispositif de dosage (41) qui est relié par voie fluidique au réservoir d'eau de rinçage (43) et configuré afin de traiter l'eau grise par amenée d'un moyen de traitement dissolvant le calcaire et/ou bactéricide,
- le réservoir d'eau de rinçage (43) étant configuré pour transmettre l'eau grise traitée comme eau de rinçage à la toilette mobile (11),
**caractérisé en ce que** le dispositif de dosage (41) est agencé sur le dispositif de filtration et le dispositif de filtration (42) comporte de plus un réservoir collecteur (40) qui est réalisé afin de recevoir des solides filtrés par le dispositif de filtration, le dispositif de filtration comportant en outre un dispositif de rinçage qui présente une amenée de rinçage (30) et une évacuation de rinçage (41) et étant réalisé afin de rincer des solides collectés dans la zone de l'élément de filtre dans le réservoir collecteur (40) et l'amenée de rinçage (30) étant réalisée et agencée en double fonction comme amenée pour l'amenée d'un moyen de traitement dissolvant le calcaire et/ou bactéricide du dispositif de dosage (41).

2. Système de réservoir d'eau de rinçage selon la revendication 1,
le dispositif de dosage (41) étant relié à l'amenée de réservoir d'eau de rinçage (44) par voie fluidique pour l'amenée du moyen de traitement dans une conduite d'amenée raccordée à l'amenée de réservoir d'eau de rinçage (44).

3. Système de réservoir d'eau de rinçage selon l'une quelconque des revendications précédentes,
le dispositif de dosage (41) étant configuré afin d'amener le moyen dissolvant le calcaire et/ou bactéricide régulièrement, en particulier en continu et/ou à intervalles à l'eau grise.

4. Système de réservoir d'eau de rinçage selon l'une quelconque des revendications précédentes,
le système de réservoir d'eau de rinçage présentant de plus un capteur (20, 30) pour la détermination d'un évènement et/ou d'un niveau du réservoir d'eau de rinçage (43) et une unité de commande (28) pour la commande du dispositif de dosage (41) et l'unité de commande (28) étant couplée par signal au capteur (20, 30) et configurée afin d'amener en fonction de l'évènement déterminé et/ou du niveau le dispositif de dosage (41) à amener le moyen dissolvant le calcaire et/ou bactéricide à l'eau grise.

5. Système de réservoir d'eau de rinçage selon l'une quelconque des revendications précédentes,
le filtre (42) présentant un tissu filtrant qui est en particulier bactéricide et/ou présente des fils d'argent.

6. Système de réservoir d'eau de rinçage selon l'une quelconque des revendications précédentes,
le système de réservoir d'eau de rinçage présente de plus un siphon inodore (23) qui est en particulier une valve ou un siphon qui est agencé dans l'amenée de réservoir d'eau de rinçage (44).

7. Système de réservoir d'eau de rinçage selon l'une quelconque des revendications précédentes,
le système de réservoir d'eau de rinçage présentant un capteur de niveau minimal (20, 30) pour la détermination d'un niveau du réservoir d'eau de rinçage (43) pour un mode de rinçage de la toilette mobile (11) et une unité de commande pour la commande au moins d'une valve qui commande l'amenée au réservoir d'eau de rinçage (43) et l'unité de commande (28) étant configurée afin d'amener le réservoir d'eau de rinçage (43) à recevoir de l'eau douce d'une amenée d'eau douce lorsque le niveau déterminé se trouve sous une valeur limite prédéterminée.

8. Système de réservoir d'eau de rinçage selon l'une quelconque des revendications précédentes,
**caractérisé par** un raccord de moyen de traitement réalisé de préférence comme fermeture à baïonnette sur le dispositif de dosage (41) pour la liaison avec un réservoir de stockage, et un réservoir de stockage réalisé comme sachet pour le moyen de traitement avec une ouverture de sortie réalisée en conséquence pour le raccordement au raccord de moyen de traitement.

9. Système de réservoir d'eau de rinçage selon la revendication précédente,
**caractérisé par** un piston de dosage qui se trouve en liaison fluidique sur un premier coté avec le courant d'eau de rinçage et se trouve en liaison fluidique sur son côté en regard de celui-ci avec le réservoir de stockage et est précontraint de préférence par un ressort dans une direction inverse à la force de pression agissant sur le premier côté, le piston de dosage délimitant sur le second côté un espace de dosage qui est en liaison fluidique par une conduite de fluide avec le réservoir d'eau de rinçage.

10. Système d'eau de rinçage d'une toilette mobile (11), en particulier d'une toilette à vide mobile (11) avec
un système de réservoir d'eau de rinçage selon l'une quelconque des revendications précédentes et
la toilette mobile (11), en particulier la toilette à vide mobile (11).

11. Système d'eau de rinçage selon la revendication 10,
le système d'eau de rinçage présentant de plus le lavabo (10).

12. Procédé de fonctionnement d'un système de réservoir d'eau de rinçage selon l'une quelconque des revendications 1 à 9, le procédé présentant les étapes suivantes : la réception d'eau grise provenant d'un lavabo (10), le traitement de l'eau grise par l'amenée d'un moyen dissolvant le calcaire et/ou bactéricide, et la transmission de l'eau grise traitée comme eau de rinçage à la toilette mobile.
